Europäisches Patentamt

European Patent Office

Office européen des brevets

(11) Veröffentlichungsnummer: **0 090 887**
**B1**

(12) **EUROPÄISCHE PATENTSCHRIFT**

(45) Veröffentlichungstag der Patentschrift: **27.05.87**

(51) Int. Cl.⁴: **B 23 K 20/00**, B 23 K 20/22

(21) Anmeldenummer: **82201093.0**

(22) Anmeldetag: **06.09.82**

(54) **Verfahren zum Diffusionsverbinden hochwarmfester Werkstoffe.**

(30) Priorität: **06.04.82 DE 3212768**

(43) Veröffentlichungstag der Anmeldung:
**12.10.83 Patentblatt 83/41**

(45) Bekanntmachung des Hinweises auf die
Patenterteilung:
**27.05.87 Patentblatt 87/22**

(84) Benannte Vertragsstaaten:
**CH DE GB LI NL**

(56) Entgegenhaltungen:
**US-A-4 043 498**

**SCHWEISSEN UND SCHNEIDEN, Band 25, Nr.
2, Februar 1973, Düsseldorf H. RISSMANN
"Beitrag zum Diffusionsschweißen von
Kohlenstoffsthal C45" Seiten 56-58
WERKSTATTTECHNIK, ZEITSCHRIFT FÜR
INDUSTRIELLE FERTIGUNG, Band 71, Nr. 1,
Januar 1981, Würzburg W. LEHRHEUER
"Diffusionsschweißen", Seiten 13-18
Patent Abstracts of Japan Band 6, Nr. 93, 29.
Mai 1982**

(73) Patentinhaber: **BBC Aktiengesellschaft Brown,
Boveri & Cie.
Haselstrasse
CH-5401 Baden (CH)**

(72) Erfinder: **Gessinger, Gernot, Dr.
Oberzelgli 523
CH-5413 Birmenstorf (CH)**
Erfinder: **Jahnke, Bernd, Dr.
Adalbert Seifriz-Strasse 10
D-6903 Neckargemünd (DE)**
Erfinder: **Singer, Robert, Dr.
Weite Gasse 14
CH-5400 Baden (CH)**

Courier Press, Leamington Spa, England.

**Beschreibung**

Die Erfindung bezieht sich auf ein Verfahren zum Diffusionsschweißen von oxiddispersionsgehärteten Legierungen auf der Basis von Nickel oder Eisen.

Ein solches Verfahren findet insbesondere bei der Fertigung von Bauteilen eine Anwendung, die aus oxiddispersionsgehärteten Legierungen hergestellt werden. Laufund Leitschaufeln sowie Wärmestausegmente von Gasturbinen können aus diesen Legierungen gefertigt werden.

Die Herstellung von Bauteilen aus einer oxiddispersionsgehärteten Legierung beginnt mit der Herstellung des die Legierung bildenden Pulvers. Die Metalle bzw. Metallverbindungen, welche für die Pulverherstellung verwendet werden, werden innerhalb einer Hochenergiemühle mechanisch legiert. Aus dem so gewonnenen Pulver werden zunächst Grundkörper durch Extrudieren hergestellt.

Diese Grundkörper werden durch Schmieden, Walzen und/oder mechanische Bearbeitung zu den endgültigen Bauelementen weiterverarbeitet.

Das Besondere an diesen oxiddispersionsgehärteten Legierungen ist, das sie eine gerichtete Struktur aufweisen. Von Nachteil ist jedoch hierbei, dass die aus der Legierung herzustellenden Bauteile nicht gegossen und nicht mit den bekannten Schmelzschweissverfahren gefügt werden können. Bauteile, die bspw. in ihrem Zentrum Durchflusskanäle aufweisen sollen, müssen bei der Herstellung aus mindestens zwei Teilelementen gefertigt werden. In diese Teilelemente werden vor dem Zusammenfügen Kanäle eingefräst, die nach dem Zusammenfügen der beiden Hälften die gewünschte Kühlkonfiguration bilden. Die feste Verbindung solcher Teilelemente zu einem Bauteil ist nicht ganz problemlos. Bauelemente, die aus oxiddispersionsgehärteten Legierungen hergestellt sind, können im Endzustand, nach der Rekristallisierung mit Hochtemperaturloten verbunden werden. Ferner können die Teile durch Diffusionsschweissen bzw. ohne Zwischenschicht zusammengesetzt werden. Der gemäss bisheriger Verfahren gewählte grobkörnige Zustand der zu fügenden Werkstücke erlaubt aber keine vollständige Integration der Schweissnaht, so dass die neu entstehende "Korngrenze" oder der Lötbereich eine Schwachstelle mit verminderten mechanischtechnologischen Eigenschaften zur Folge hat. Bei Verwendung von Hochttemperturloten führt das Anlösen des Grundwerkstoffes zu einer die Festigkeit vermindernden Agglomeration der Oxiddispersion.

In den Patent Abstracts of Japan, Band 6, Nr. 93, 29. Mai 1982 betreffend JP—A—57-29688 wird über ein Verfahren zur Erhöhung der Kerbschlagzähigkeit von diffusionsgefügten Bauteilen berichtet. Danach werden die zu verbindenden Bauteile unter Vakuum oder nichtoxydierender Atmosphäre unter Ausübung eines Druckes bis unter die Solidustemperatur erwärmt, daraufhin in eine Kühlkammer gebracht und unter die Rekristallisationstemperatur abgekühlt und dann wieder auf eine der Fügetemperatur entsprechende oder höher liegende Temperatur gebracht.

Die Erfindung liegt die Aufgabe zugrunde, ein Schweissverfahren anzugeben, mit dem Bauteile aus oxiddispersionsgehärteten legierungen mit hohen Festigkeiten verschweisst werden können, wobei die Nachteile einer Schmelzzone oder einer neuen Korngrenze vermieden werden.

Diese Aufgabe wird erfindungsgemäss durch die Merkmale des Patentanspruchs 1 gelöst.

Das Verschweissen der miteinander zu verbindenden Bauteile erfolgt vor der Rekristallisation bzw. der gerichteten Rekristallisation der oxiddispersionsgehärteten Legierung. Vorzugsweise werden die Bauteile direkt nach Beendigung ihrer endgültigen Formgebung, noch in ihrem feinkörnigen Zustand, während hochisostatischer Pressprozesse zusammengefügt. Das Verschweissen erfolgt bei einer Temperatur, die etwas unterhalb oder nur geringfügig oberhalb der Rekristallisationstemperatur liegt. Insbesondere wird eine Schweisstemperatur zwischen 800° und 1100°C gewählt. Der Schweissdruck und die Verformungsgeschwindigkeit werden so gross gewählt, dass eine Verformung der zu verbinden den Flächen erfolgt, so dass eine vollständige Berührung derselben erzielt wird. Die Verformungsgeschwindigkeit kann durch eine entsprechende Wahl der Pressstempelgeschwindigkeit beeinflusst werden. Der bei dem erfindungsgemässen Diffusionsschweissverfahren angewandte Druck beträgt vorzugsweise 1 bis 200 MPa. Er kann auch grösser gewählt werden. Durch die gewählte Schweisstemperatur zwischen 800 und 1100°C wird erreicht, dass die Rekristallisation des die Bauelemente bildenden metallischen Materials vor dem vollständigen Kontakt der zu verbindenden Flächen nicht eintritt. Ein Umverteilung der Oxiddispersion findet nicht statt. Nach dem Verschweissen der zu verbindenden Bauelement werden diese an der Luft mit einer vorgebbaren Geschwindigkeit abgekühlt. Anschliessend werden die miteinander verbundenen Bauteile schnell auf oder über die Rekristallisationstemperatur hinaus erhitzt. Vorzugsweise werden sie bis zur Lösungsglühtemperatur erhitzt, so dass eine Rekristallisation über die Fügefläche einsetzt.

Es besteht die Möglichkeit, auf das Abkühlen der durch das Diffusionsschweissen verbundenen Bauteile zu verzichten. In diesem Fall werden die zusammengefügten Bauteile direkt nach dem Diffusionsschweissen von der Schweisstemperatur ausgehend schnell auf oder über die Rekristallisationstemperatur, insbesondere die Lösungsglühtemperatur erhitzt, so dass eine Rekristallisation über die Fügefläche einsetzt.

Erfolgt die Wärmebehandlung direkt im Anschluss an den Schweissvorgang, so wird der auf die Bauelement, insbesondere die Schweisszone wirkende Druck, der vorzugsweise bei 1 bis 200 MPa liegt, der Druckfestigkeit des metallischen Materials entsprechend während des Aufheizens auf die Lösungsglühtemperatur reduziert. Die Lösungsglühtemperatur wird solange beibehalten, bis die Rekristallisation über die Schweissnaht zu der gewünschten Materialfestigkeit geführt hat.

Beim Lösungsglühen wird eine Rekristallisation bewirkt, durch die das Wachstum der Kristalle über die Fügezone erfolgt, so dass selbige vollständig verschwindet, und eine hochfeste Verbindung zwischen den Bauteilen erreicht wird. Beim erfindungsgemässen Diffusionsschweissen wird, insbesondere durch die oben beschriebene Wahl der temperatur und des Drucks, erreicht, daß es in der Fügezone zu keinem Feinkornwachstum uber 1 μm kommt.

Die Wärmebehandlung des durch das Diffusionsschweißen behandelten Bauteils kann auch durch eine Zonenrekristallisation erfolgen. Eine solche Zonenrekristallisation wird vorzugsweise mit steilen Temperaturgradienten und unter Druck durchgeführt.

Die Erfindung wird nachfolgend anhand von Zeichnungen näher erläutert.

Es zeigen:

Fig. 1 ein Bauelement einer Gasturbine, im Vertikalschnitt,

Fig. 2 die beiden Teilemente, die das in Fig. 1 dargestellte Bauelement bilden.

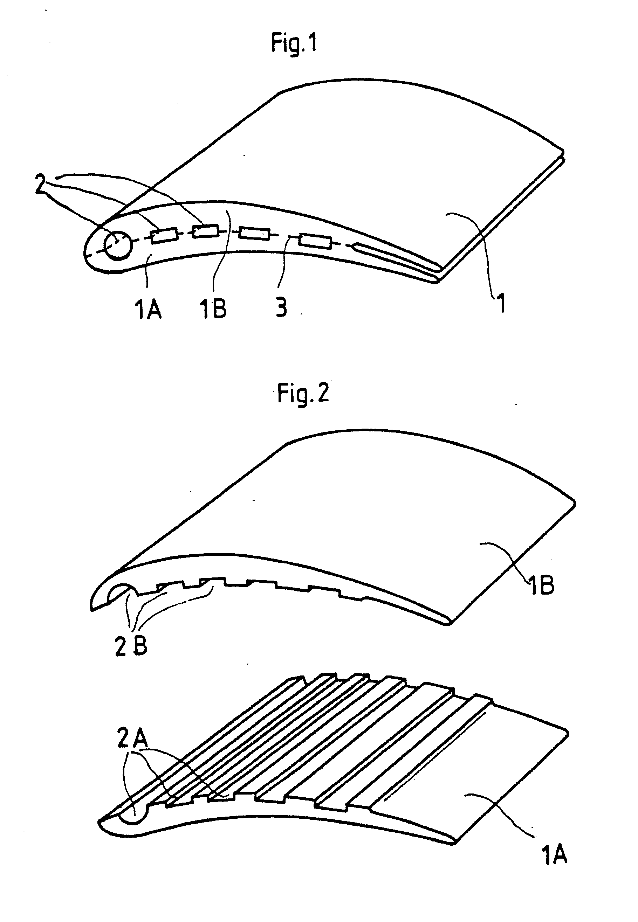

Fig. 1 zeigt das mit dem heißen Gas in Berührung kommende Bauelement 1 einer Gasturbine. Das Bauelement ist aus einer oxiddispersionsgehärteten Legierung gefertigt. Bei dem hier gezeigten Ausführungsbeispiel wird feinkörniges oxiddispersionsgehärtetes metallisches Material verwendet, das aus 13 bis 17 Gew.% Chrom, 2,5 bis 6 Gew.% Aluminium, 2 bis 4,25 Gew.% Titan, 0,4 bis 4,5 Gew.% Molybdän, 3,75 bis 6,25 Gew,% Wolfram, 0,1 bis 3 Gew.% Tantal, 0,02 bis 0,5 Gew.% Zirkonium, 0,01 bis 0,02 Gew.% Bor, 0,02 bis 2 Gew.% Yttriumoxid, sowie Nickel besteht. Die angegebenen Gewichtsmengen beziehen sich auf das Gesamtgewicht der Legierung.

Es besteht die Möglichkeit auch eine Legierung zu verwenden, die eine Zusammensetzung aus 18 bis 22 Gew.% Chrom, 0,02 bis 1 Gew.% Aluminium, 0,02 bis 1 Gew.% Titan, 0,2 bis 1 Gew.% Yttrium aufweist, wobei der übrige Bestandteil der Legierung Nickel ist. Ferner kann für die Herstellung des erfindungsgemäßen Bauteils 1 auch eine Legierung verwendet werden, die 18 bis 22 Gew.% Chrom, 2 bis 6 Gew.% Aluminium, 0,02 bis 1 Gew.% Titan und 0,2 bis 1 Gew.% Yttriumoxid enthält, wobei der übrige Anteil durch Eisen gebildet wird. Die angegebenen Gewichtsmengen der beiden zuletzt genannten Legierungszusammensetzungen beziehen sich auf das Gesamtgewicht der Legierung. Das feinkörnige metallische Material, das die Legierungen bildet, wird in einer Hochenergiemühle mechanisch legiert.

Bei der Herstellung der Teilelemente 1A und 1B werden zunächst aus einer der oben beschriebenen Legierungen zwei Grundkörper (hier nicht dargestellt) durch Extrudieren gefertigt. Aus diesen Grundkörpern werden durch Schmieden, Walzen und/oder mechanische Bearbeitung die beiden in Fig. 2 dargestellten Teileelemente 1A und 1B hergestellt.

Wie Fig. 1 zeigt, besitzt das Bauelement 1 im Zentrum mehrere zu seiner Längsachse parallel verlaufende Kühlkanäle 2. Da das Bauelement 1 nicht aus der Legierung gegossen werden kann, muß es aus den beiden oben genannten Teileelementen 1A und 1B zusammengefügt werden. Zur Ausbildung der Kühlkanäle 2 werden vor der Verbindung der beiden Teilement 1A und 1B durch das erfindungsgemäße Diffusionsschweißverfahren in diese Vertiefungen 2A und 2B eingefräst.

Die in Fig. 2 dargestellten Teilelemente 1A und 1B entsprechen genau den beiden Hälften des Bauelementes 1, die beim Durchtrennen desselben längs seiner Längsachse entstehen. Nach dem Einfräsen der Vertiefungen 2A und 2B werden die beiden Teilelemente 1A und 1B mit dem erfindungsgemäßen Diffusionsschweißverfahren zusammengefügt. Die beiden Teilelemente 1A und 1B befinden sich noch in ihrem feinkörnigen Zustand und sind noch nicht wärmebehandelt. Die Fügezone 3 wird einer Temperatur von 800 bis 1100°C ausgesetzt. Gleichzeitig wird die Fügezone 3 einem Schweißdruck von vorzugsweise 1 bis 200 MPa unterzogen, wobei es zu einer Verformung der miteinander zu verbindenden Flächen kommt. Die bei dem Schweißverfahren angewendete Temperatur ist so gewählt, daß vor der innigen vollflächigen Berührung der miteinander zu verbindenden Flächen keine Rekristallisation eintritt. Ferner wird durch die oben gewählte Temperatur und den gewählten Schweißdruck erreicht, daß es zu keinem Feinkornwachstum über 1 μm kommt.

Nach Beendigung des Schweißverfahrens wird das gerade gebildete Bauelement 1 einer Wärmebehandlung unterzogen. Es besteht die Möglichkeit, das Bauelement 1 dieser Wärmebehandlung direkt zu unterziehen oder zunächst abzukühlen. Im letztgenannten Fall wird das Bauelement 1 nach dem Abkühlen schnell auf oder über die Rekristallisationstemperatur, insbesondere auf die Lösungsglühtemperatur erhitzt, so daß eine Rekristallisation über die Fügeflächen einsetzt.

Wird das Bauelement nach der Beendigung des Schweißvorgangsnicht abgekühlt, so kann es, ausgehend von der Schweißtemperatur, schnell auf oder über die Rekristallisationstemperatur, insbesondere auf die Lösungsglühtemperatur erhitzt werden, so daß auch hierbei eine Rekristallisation über die Fügeflächen einsetzt. Wird das Bauelement nicht abgekühlt, so wird der auf die Fügezone 3 wirkende Schweißdruck beim Erhitzen des Bauelementes allmählich reduziert, und zwar abhängig von der Zunahme der Druckfestigkeit des Materials in der Fügezone 3. Die Lösungsglühtemperatur, auf die das Bauelement aufgeheizt ist, bleibt so lange erhalten, bis die Rekristallisation über die Schweißnaht zur Erreichung der gewünschten Festigkeit des Materials in der Fügezone 3 geführt hat.

Die Wärmebehandlung des Bauelementes 1, insbesondere das Aufheizen desselben, auf die Lösungsglühtemperatur erfolgt vorzugsweise in einem hierfür speziell ausgebildeten Ofen. Anstelle des Lösungsglühens kann auch eine Zonenrekristalisation durchgeführt werden. Dies geschieht vorzugsweise bei schnell ansteigenden Temperaturen und unter Druck.

## Patentansprüche

1. Verfahren zum Verbinden von Bauelementen (1, 1A, 1B) aus einer hochwarmfesten oxiddispersionsgehärteten Legierung auf der Basis von Nikkel oder Eisen mittels Diffusionsschweissen, dadurch gekennzeichnet, dass die Legierung der zu verbindenden Bauelemente (1, 1A, 1B) in ihrem feinkörnigen, nicht rekristallisierten Ausgangszustand bei einer Temperatur zwischen 800 und 1100°C und unter einem Druck von 1 bis 200 MPa verschweisst wird, und dass das auf diese Weise hergestellte Werkstück nach dem Verschweissen derart einer Wärmebehandlung unterzogen wird, so dass eine Rekristallisation über die Fügefläche einsetzt.

2. Verfahren nach Anspruch 1, dadurch gekennzeichnet, dass nach dem Erreichen eines nahezu vollständigen Materialkontaktes der zu verbindenden Flächen das geschweisste Werkstück an der Luft mit einer definierten Geschwindigkeit abgekühlt wird und nach dem Abkühlen auf oder über die Rekristallisationstemperatur, insbesondere die Lösungsglühtemperatur erhitzt wird.

3. Verfahren nach Anspruch 1, dadurch gekennzeichnet, dass das Werkstück nach dem Erreichen eines nahezu vollständigen Materialkontaktes ausgehend von der Schweisstemperatur schnell auf oder über die Rekristallisationstemperatur, insbesondere die Lösungsglühtemperatur erhitzt wird.

4. Verfahren nach Anspruch 1, dadurch gekennzeichnet, dass der Schweissdruck beim zeitlichen Durchlaufen des beim Aufheizen auf Schweisstemperatur sich ergebenden Temperaturintervalls in Funktion der Zeit derart gesteuert wird, dass er nach Massgabe der temperaturabhängigen Druckfestigkeit der Legierung in der Fügezone (3) vermindert wird.

5. Verfahren nach einem der Ansprüche 3, 4 oder 5, dadurch gekennzeichnet, dass das Werkstück so lange auf der Lösungsglühtemperatur gehalten wird, bis die rekristallisierte Fügezone (3) die geforderte mechanische Festigkeit der Legierung erreicht hat.

6. Verfahren nach Anspruch 1, dadurch gekennzeichnet, dass das Werkstück zur Einstellung eines groben gerichteten Kornes zonengeglüht wird.

7. Verfahren nach Anspruch 7, dadurch gekennzeichnet, dass die Zonenglühung unter Einhaltung eines grossen Temperaturgradienten und unter Druck durchgeführt wird.

## Revendications

1. Procédé pour la jonction de composants (1, 1A, 1B) en un alliage à base de nickel ou de fer durci par dispersion d'oxydes et résistant à chaud, par soudage par diffusion, caractérisé en ce que l'alliage des composants (1, 1A, 1B) à joindre est soudé dans son état initial non recristallisé, à grain fin, à une températur comprise entre 800 et 1100°C et sous une pression de 1 à 200 MPa, et en ce que la pièce obtenue de cette façon est, après le soudage, soumise à un traitement thermique tel qu'il se produise une recristallisation dans la surface de jonction.

2. Procédé suivant la revendication 1, caractérisé en ce qu'après l'obtention d'un contact matérial presque total des faces à joindre, la pièce soudée est refroidie à l'air avec une vitesse définie et après le refroidissement, elle est chauffée à sa température de recristallisation ou audelà de cette température, en particulier à sa température de recuit de mise en solution.

3. Procédé suivant la revendication 1, caractérisé en ce qu'après l'obtention d'un contact matérial presque total, la pièce est chauffée rapidement depuis la température de soudage jusqu'à la température de recristallisation ou au-delà de cette température, en particulier jusqu'à sa température de recuit de mise en solution.

4. Procédé suivant la revendication 1, caractérisé en ce que, pendant la durée du franchissement de l'intervalle de température apparaissant lors du chauffage à la température de soudage, la pression de soudage est réglée en fonction du temps de telle façon qu'elle soit réduite dans la zone de jonction (3) dans la mesure où la résistance de l'alliage à la compression dépend de la température.

5. Procédé suivant une des revendications 3, 4 ou 5, caractérisé en ce que la pièce est maintenue à la température de recuit de mise en solution pendant une durée suffisante pour que la zone de jonction (3) recristallisée atteigne la résistance mécanique désirée de l'alliage.

6. Procédé suivant la revendication 1, caractérisé en ce que la pièce est soumise à un recuit par zones afin de former un gros grain orienté.

7. Procédé suivant la revendication 6, caractérisé en ce que le recuit par zones est exécuté sous pression et en appliquant un gradient de température élevé.

## Claims

1. Process for joining components (1, 1A, 1B), consisting of a highly heat-resistant oxide dispersion-hardened alloy based on nickel or iron, by means of diffusion welding, characterized in that the alloy of the components (1, 1A, 1B), which are to be joined, is welded in its fine-grained, not recrystallized initial state at a temperature between 800 and 1100°C and under a pressure of 1 to 200 MPa, and that the workpiece produced in this way is subjected after welding to a heat treatment in such a way that recrystallization across the joint face takes place.

2. Process according to Claim 1, characterized in that, after almost full material contact of the faces which are to be joined has been reached, the welded workpiece is cooled in air at a defined rate and, after cooling, is heated to the recrystallization temperature or higher, in particular to the solution annealing temperature.

3. Process according to Claim 1, characterized in that, after almost complete material contact has been reached, the workpiece is rapidly heated from the welding temperature to the recrystallization temperature or higher, in particular to the solution annealing temperature.

4. Process according to Claim 1, characterized in that the welding pressure, while passing through the temperature interval resulting from heating to the welding temperature, is controlled as a function of time in such a way that the pressure is reduced in accordance with the temperature-dependent compressive strength of the alloy in the joint zone (3).

5. Process according to one of Claims 3, 4 or 5, characterized in that the workpiece is held at the solution annealing temperature until the recrystallized joint zone (3) has reached the required mechanical strength of the alloy.

6. Process according to Claim 1, characterized in that the workpiece is zone-annealed in order to produce a coarse oriented grain.

7. Process according to Claim 6, characterized in that the zone annealing is carried out while maintaining a steep temperature gradient and under pressure.

## Fig.1

1A    1B    3    1

## Fig.2

2 B

1B

2 A

1A